# EUROPEAN PATENT SPECIFICATION

(11) **EP 3 444 100 B1**
(45) Date of publication and mention of the grant of the patent: **08.06.2022**
(21) Application number: 17186481.2
(22) Date of filing: 16.08.2017
(51) Int. Cl.: B29C 64/153, B22F 3/105, B29C 64/282, B29C 64/393, B33Y 10/00, B33Y 30/00, B33Y 40/00, B33Y 50/02, B22F 10/20, B22F 12/00

(54) **APPARATUS FOR ADDITIVELY MANUFACTURING THREE-DIMENSIONAL OBJECTS**
VORRICHTUNG ZUR GENERATIVEN FERTIGUNG DREIDIMENSIONALER OBJEKTE
APPAREIL DE FABRICATION ADDITIVE D'OBJETS TRIDIMENSIONNELS

(43) Date of publication of application: 20.02.2019
(73) Proprietor: CL Schutzrechtsverwaltungs GmbH, 96215 Lichtenfels (DE)
(72) Inventor: Florian, Bechmann, 96215 Lichtenfels (DE); Schumann, Philipp, 96274 Itzgrund - Schottenstein (DE); Popp, Alexandra, 96231 Bad Staffelstein (DE); Bokkes, Tobias, 96253 Untersiemau (DE); EBERT, Marie-Christin, 96450 Coburg (DE)
(74) Representative: Hafner & Kohl PartmbB

(56) References cited:
- EP-A1- 3 196 001
- EP-A1- 3 565 683
- FR-A1- 2 987 293
- US-A- 5 393 482

## Description

The invention relates to an apparatus for additively manufacturing three-dimensional objects by means of successive layerwise selective irradiation and consolidation of layers of a powdered build material which can be consolidated by means of an energy beam.

Respective apparatuses for additively manufacturing three-dimensional objects, e.g. technical components, are widely known and may be embodied as selective laser sintering apparatuses, selective laser melting apparatuses or selective electron beam melting apparatuses, for instance.

It is known that the structural, i.e. particularly mechanical, properties of additively manufactured three-dimensional objects are significantly influenced by the cooling behavior of the respective selectively consolidated portions of layers of powdered build material which have been selectively irradiated by the energy beam during the additive manufacturing process. The significant influence of the cooling behavior of the selectively consolidated portions of the layers of powdered build material on the structural properties of the additively manufactured three-dimensional objects is based on the fact that the cooling behavior essentially determines the microstructure of the additively manufactured three-dimensional objects. As an example, the cooling behavior may influence the build-up of internal stresses forming the basis of (micro)-crack formation within additively manufactured three-dimensional objects which may compromise the structural properties of the additively built three-dimensional objects.

FR 2 987 293 A1 discloses an additive manufacturing apparatus.

US 5,393,482 discloses a multiple beam sintering device including a sintering beam having a focal point at a powder bed and at least one defocussed laser beam incident on a region near the focal point of the focussed beam.

EP 3 565 683 A1, which is a document according to Art. 54 (3) EPC, discloses a systems and methods for fabricating a component based on local thermal conductivity of a build material.

In view of the above, it is the object of the present invention provide an apparatus for additively manufacturing three-dimensional objects allowing for a reliable and, in particular highly integrateable, determination of the cooling behavior of layers of powdered build material which have been selectively irradiated by an energy beam during an additive manufacturing process.

This object is achieved by an apparatus for additively manufacturing three-dimensional objects according to Claim 1. The claims depending on Claim 1 relate to possible embodiments of the apparatus according to Claim 1.

The apparatus described herein is an apparatus for additively manufacturing three-dimensional objects, e.g. technical components, by means of successive layerwise selective irradiation and consolidation of layers of a powdered build material ("build material") which can be consolidated by means of an energy beam. A respective build material can comprise at least one of a metal powder, a ceramic powder, or a polymer powder. A respective energy beam can be a laser beam or an electronic beam. A respective apparatus can be a selective laser sintering apparatus, a selective laser melting apparatus, or a selective electron beam melting apparatus, for instance.

The apparatus comprises a number of functional devices which are operable during its operation. Each functional device may comprise a number of functional units. Exemplary functional devices are a build material application device, e.g. a coating device, configured to apply a layer of build material which is to be selectively irradiated and consolidated, e.g. in a build plane of a process chamber of the apparatus, and an irradiation device configured to selectively irradiate and consolidate portions of a layer of build material with at least one energy beam.

The apparatus described herein comprises an irradiation device configured to generate at least a first and a second energy beam, whereby the second energy beam follows the path/track of the first energy beam with a defined local and/or time offset. The irradiation device is thus, configured to selectively irradiate a layer of build material with at least a first and a second energy beam. Thereby, the irradiation device is configured to control the motion of the first and second energy beam in such a manner that the second energy beam (directly) follows the path/track of the first energy beam with a defined local and/or time offset.

The irradiation device may be configured to generate the first energy beam with different beam properties, particularly a higher beam power, smaller beam size, etc., compared with the second energy beam.

The first energy beam may have a beam power high enough to fuse, i.e. particularly melt, build material while being selectively irradiated with the first energy beam. The energy input into selectively irradiated portions of a layer of build material by the first energy beam is thus, sufficient to fuse, particularly melt, selectively irradiated portions of a layer of build material. Hence, the first energy beam serves for fusing of build material.

The second energy beam may have a beam power not high enough to fuse, i.e. particularly melt, build material while being selectively irradiated with the second energy beam. The energy input into selectively irradiated portions of a layer of build material by the second energy beam is thus, not sufficient to selectively fuse, particularly melt, selectively irradiated portions of a layer of build material. The energy input into selectively irradiated portions of a layer of build material by the second energy beam is yet, sufficient for tempering portions of a layer of build material after being selectively irradiated with the first energy beam. Hence, the second energy beam serves for tempering of selectively irradiated portions of a layer of build material. Tempering allows for controlling the temperature and thus, the cooling behavior of portions of a layer of build material after being selectively irradiated with the first energy beam.

As will be apparent from the below description the irradiation device comprises a number of functional units comprising at least one beam generating unit configured to generate at least a first and a second energy beam, and at least a first and a second beam deflection unit (scanning unit) configured to deflect respectively the first and the second energy beam to different positions of a layer of build material.

The apparatus further comprises a detection device configured to detect (electromagnetic) radiation emitted or reflected from the or a portion of a layer of build material which was selectively irradiated by the first energy beam. The detection device may comprise a at least one detection element configured to detect (electromagnetic) radiation emitted or reflected from the or a portion of a layer of build material which was selectively irradiated by the first energy beam. The detection device may be a sensor device, e.g. an optical or thermographical sensor device, e.g. an optical or thermographical camera, photodiode, etc., the detector element may be sensor element, e.g. an optical or thermographical sensor element, e.g. an optical or thermographical camera element, photodiode element, etc.

The apparatus further comprises an evaluation device configured to evaluate detected radiation emitted from a portion of a layer of build material which was selectively irradiated by the first energy beam with regard to the cooling behavior of the respective portion of the layer of build material which was selectively irradiated by the first energy beam. The evaluation is based on the insight that radiation emitted from a portion of a layer of build material which was selectively irradiated by the first energy beam is a direct or indirect measure for the temperature and thus, cooling behavior of the respective portion of the layer of build material which was selectively irradiated by the first energy beam. The evaluation device may comprise at least one evaluation algorithm configured to evaluate detected radiation emitted from a portion of a layer of build material which was selectively irradiated by the first energy beam with regard to the cooling behavior of the respective portion of the layer of build material which was selectively irradiated by the first energy beam. The evaluation device may be embodied in hard- and/or software.

By means of detecting radiation emitted or reflected from the or a portion of a layer of build material which was selectively irradiated by the first energy beam and evaluating detected radiation emitted from a portion of a layer of build material which was selectively irradiated by the first energy beam with regard to the cooling behavior of the respective portion of the layer of build material which was selectively irradiated by the first energy beam, an apparatus for additively manufacturing three-dimensional objects allowing for a reliable and, in particular highly integrateable, determination of the cooling behavior of respective selectively consolidated portions of layers of build material which have been selectively irradiated by an energy beam during an additive manufacturing process is provided.

It was mentioned that the irradiation device may comprise a number of functional units allowing for generating at least a first and a second energy beam. According to an embodiment, the irradiation device may comprise a first beam generation unit configured to generate the first energy beam and a second beam generation unit configured to generate the second energy beam. According to another embodiment, the irradiation device may comprise only one beam generating unit configured to generate an energy beam (which is split so as to generate the first and second energy beam) and an associated beam splitting unit configured to split the energy beam generated by the beam generating unit so as to generate the first and second energy beam. The irradiation device may also comprise at least one beam deflection unit configured to deflect an energy beam to different positions of a layer of build material. The beam deflection unit may comprise a number of, particularly moveably supported, beam deflection elements, e.g. deflection mirrors. It is possible that the irradiation device comprises at least a first and a second beam deflection unit, whereby a first beam deflection unit is assigned to the first energy beam so as to deflect the first energy beam to different positions of a layer of build material and a second beam deflection unit is assigned to the second energy beam so as to deflect the second energy beam to different positions of a layer of build material.

In either case, the irradiation device comprises at least a first and a second beam guidance unit configured to guide the first and/or second energy beam along an optical path. The beam guidance unit may comprise a number of optical elements, e.g. fibers, lenses, mirrors, etc. building the optical path. The beam guidance unit is typically, disposed between the beam generating unit and a beam deflection unit so as to guide an energy beam along an optical path extending from a respective beam generating unit to a respective beam deflection unit.

In particular, the irradiation device comprises a beam guidance unit configured to guide at least the second energy beam, particularly between a beam generation unit configured to generate the second energy beam and a beam deflection unit configured to deflect at least the second energy beam to different positions of a layer of build material.

The detection device is assigned to the beam guidance unit configured to guide at least the second energy beam. In particular, the detection device may be arranged in an on-axis arrangement with respect to the beam deflection unit configured to deflect at least the second energy beam. A respective on-axis arrangement of the detection device allows both in constructive and functional regard for a highly integrated arrangement of the detection device. A respective on-axis arrangement of the detection device further allows for obtaining high-dynamic and high-resolution detection information, e.g. high-dynamic and high-resolution detection images, of the detected portions of respective layers of build material. A respective on-axis arrangement of the detection device also allows for obtaining coordinate values, etc. of respective detected information.

The beam guidance unit may comprise at least one optical element, e.g. a semi-reflective mirror element, configured to guide radiation emitted from a portion of a layer of build material which was selectively irradiated by the first energy beam to the detecting device. Hence, the same optical path can be used for an energy beam and for the radiation emitted from a portion of a layer of build material which was selectively irradiated by the first energy beam. The direction of extension of the radiation emitted from a portion of a layer of build material which was selectively irradiated by the first energy beam through the optical path built by the respective beam guidance unit is at least partly a reverse direction of extension of the energy beam through the optical path.

The evaluation device may be configured to generate an evaluation information describing/indicating the cooling behavior of the portion of the layer of build material which was selectively irradiated by the first energy beam evaluated from the detected radiation emitted from a portion of a layer of build material which was selectively irradiated by the first energy beam. The evaluation information may describe/indicate diverse chemical and/or physical parameters being directly or indirectly related to the cooling behavior of the portion of the layer of build material which was selectively irradiated by the first energy beam. Examples of respective parameters are composition of atmosphere, radiation power, temperature, etc. The evaluation information can be communicated to diverse functional devices of the apparatus by means of communication links between these functional devices. The evaluation information can be communicated to a user interface device, e.g. a screen, of the apparatus and hence, output to a user.

The apparatus comprises a control device assigned to diverse functional devices of the apparatus and configured to control operation of diverse functional devices of the apparatus. As an example, the control device may be configured to control operation of the irradiation device. In particular, the control device may be configured to control operation of the irradiation device on basis of an evaluation information determined by the evaluation device. Hence, by controlling operation of the irradiation device on basis of a respective evaluation information, the first and/or second energy beam may be controlled in such a manner so as to achieve a desired cooling behavior of portions of layers of build material which were selectively irradiated by the first energy beam and therefore, a desired microstructure within the object to be additively built. Controlling operation of the irradiation device and thus, of the cooling behavior may be implemented as a control-loop allowing for a real-time control of the cooling behavior and other factors influencing the quality of the additively manufactured object.

The detection device may be configured to additionally detect radiation emitted from a portion of a layer of build material which is currently selectively irradiated by the first energy beam. In such a manner, not only the cooling behavior of portions of layers of build material which were selectively irradiated by the first energy beam, but also the fusing behavior of portions of layers of build material which are currently selectively irradiated by the first energy beam can be detected. Of course, the apparatus may also comprise at least one further detection device configured to detect radiation emitted from a portion of a layer of build material which is currently selectively irradiated by the first energy beam.

In either case, the or a further evaluation device may be configured to evaluate detected radiation emitted from a portion of a layer of build material which is currently selectively irradiated by the first energy beam with regard to the fusing behavior of the portion of the layer of build material which is currently selectively irradiated by the first energy beam. The (further) evaluation device may comprise at least one evaluation algorithm configured to evaluate detected radiation emitted from a portion of a layer of build material which is currently selectively irradiated by the first energy beam with regard to the fusing behavior of the portion of the layer of build material which is currently selectively irradiated by the first energy beam. The evaluation device may be embodied in hard- and/or software.

Further, the invention also relates to a method for additively manufacturing three-dimensional objects by means of successive layerwise selective irradiation and consolidation of layers of a build material which can be consolidated by means of an energy beam according to claim 8. The method may be implemented as a selective laser sintering method, a selective laser melting method or a selective electron beam melting method, for instance. The annotations concerning the apparatus apply to the method in analogous manner.

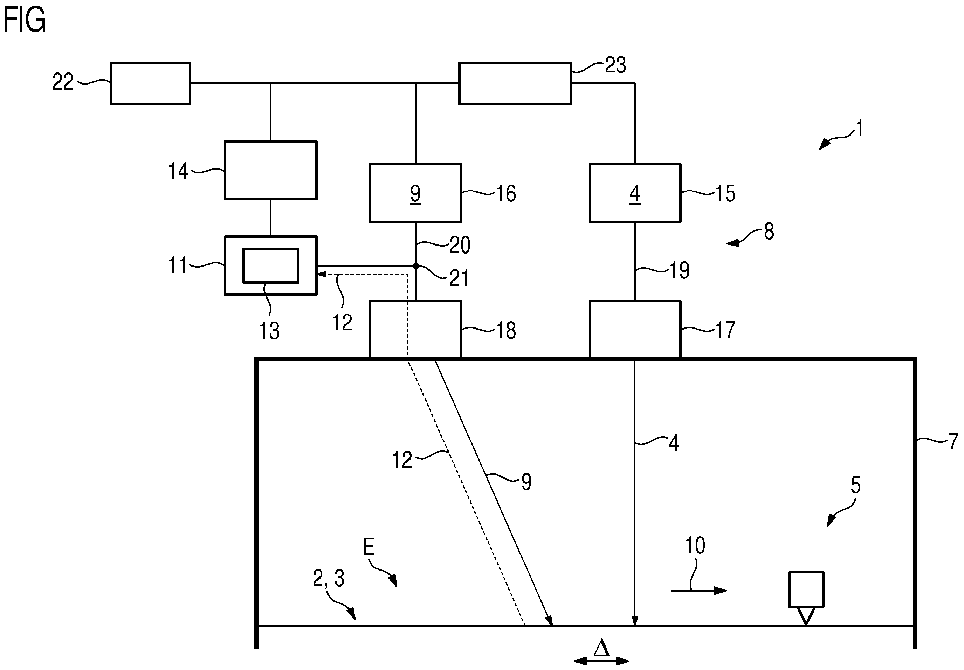

Exemplary embodiments of the invention are described with reference to the Fig., whereby the sole Fig. shows a principle drawing of a section of an apparatus for additively manufacturing three-dimensional objects according to an exemplary embodiment.

The sole Fig. shows a principle drawing of a section of an apparatus 1 for additively manufacturing three-dimensional objects, e.g. technical components, by means of successive layerwise selective irradiation and accompanying consolidation of layers 2 of a powdered build material 3, e.g. a metal powder, which can be consolidated by means of an energy beam 4, e.g. a laser beam. The apparatus 1 can be a selective laser melting apparatus, for instance.

The apparatus 1 comprises a number of functional devices which are operable during its operation. Each functional device may comprise a number of functional units. The apparatus 1 comprises a control device 23 assigned to the functional devices of the apparatus 1 and configured to control operation of the functional devices.

Exemplary functional devices are a build material application device 5, e.g. a coating device, configured to apply a layer 2 of build material 3 which is to be selectively irradiated and consolidated in a build plane E of a process chamber 7 of the apparatus 1, and an irradiation device 8 configured to selectively irradiate and consolidate portions of a layer 2 of build material 2 with at least one energy beam 4.

The irradiation device 8 is configured to generate at least a first energy beam 4 and a second energy beam 9, whereby the second energy beam 9 follows the path/track of the first energy beam 4 with a defined offset Δ. The irradiation device 8 is thus, configured to selectively irradiate a layer 2 of build material 3 with at least a first and a second energy beam 4, 9. Thereby, the irradiation device 8 is configured to control the motion of the first and second energy beam 4, 9 in such a manner that the second energy beam 9 (directly) follows the path/track (indicated by arrow 10) of the first energy beam 4 with the defined local offset Δ.

The irradiation device 8 is configured to generate the first energy beam 4 with different beam properties compared with the second energy beam 9. The first energy beam 4 has a beam power high enough to fuse, i.e. particularly melt, build material 3 while being selectively irradiated with the first energy beam 4. The energy input into selectively irradiated portions of a respective layer 2 of build material 3 by the first energy beam 4 is thus, sufficient to fuse, particularly melt, build material 3. Hence, the first energy beam 4 serves for fusing of build material 3.

The second energy beam 9 has a beam power not high enough to fuse, i.e. particularly melt, build material 3 while being selectively irradiated with the second energy beam 9. The energy input into selectively irradiated portions of a respective layer 2 of build material 3 by the second energy 9 beam is thus, not sufficient to selectively fuse, particularly melt, build material 3. The energy input into selectively irradiated portions of a respective layer 2 of build material 3 by the second energy beam 9 is yet, sufficient for tempering portions of a layer 2 of build material 3 after being selectively irradiated with the first energy beam 4. Hence, the second energy beam 9 serves for tempering of build material 3. Tempering allows for controlling the temperature and thus, the cooling behavior of portions of a respective layer 2 of build material 3 after being selectively irradiated with the first energy beam 4.

The apparatus 1 further comprises a detection device 11 configured to detect (electromagnetic) radiation 12 emitted or reflected from a portion of a layer 2 of build material 3 which was selectively irradiated by the first energy beam 4. The detection device 11 comprises a at least one detection element 13 configured to detect (electromagnetic) radiation emitted or reflected from the portion of the layer 2 of build material 3 which was selectively irradiated by the first energy beam 4. The detection device 11 may be a sensor device, e.g. an optical or thermographical sensor device, e.g. an optical or thermographical camera, photodiode, etc., the detector element 13 may be sensor element, e.g. an optical or thermographical sensor element, e.g. an optical or thermographical camera element, photodiode element, etc.

The apparatus 1 further comprises an evaluation device 14 configured to evaluate detected radiation 12 with regard to the cooling behavior of the respective portion of the layer 2 of build material 3 which was selectively irradiated by the first energy beam 4. The evaluation is based on the insight that radiation 12 emitted from the portion of the layer 2 of build material 3 which was selectively irradiated by the first energy beam 4 is a measure for the temperature and thus, cooling behavior of the respective portion of the layer 2 of build material 3 which was selectively irradiated by the first energy beam 4. The evaluation device 14 may comprise at least one evaluation algorithm configured to evaluate detected radiation 12.

The evaluation device 14 is configured to generate an evaluation information describing/indicating the cooling behavior of the portion of a layer 2 of build material 3 which was selectively irradiated by the first energy beam 4 evaluated from the detected radiation 12 emitted from the portion of the layer 2 of build material 3 which was selectively irradiated by the first energy beam 4. The evaluation information may describe/indicate diverse chemical and/or physical parameters being directly or indirectly related to the cooling behavior of the portion of the layer 2 of build material 3 which was selectively irradiated by the first energy beam 4. The evaluation information can be communicated to diverse functional devices of the apparatus 1 by means of communication links between these functional devices. The evaluation information can be communicated to a user interface device 22, e.g. a screen, of the apparatus 1 and hence, output to a user.

The control device 23 may be configured to control operation of the irradiation device 8 on basis of an evaluation information determined by the evaluation device 14. Hence, by controlling operation of the irradiation device 8 on basis of a respective evaluation information, the first and/or second energy beam 4, 9 may be controlled in such a manner so as to achieve a desired cooling behavior of portions of layers 2 of build material 3 which were selectively irradiated by the first energy beam 4 and therefore, a desired microstructure within the three-dimensional object to be additively built. Controlling operation of the irradiation device 8 and thus, of the cooling behavior may be implemented as a control-loop allowing for a real-time control of the cooling behavior and other factors influencing the quality of the additively manufactured object.

By means of detecting radiation 12 emitted or reflected from portions of a layer 2 of build material 3 which was selectively irradiated by the first energy beam 4 and evaluating detected radiation 12 with regard to the cooling behavior of the respective portion of the layer 2 of build material 3 which was selectively irradiated by the first energy beam 4, the apparatus 1 allows for a reliable and, in particular highly integrateable, determination of the cooling behavior of respective selectively consolidated portions of layers 2 of build material 3 which have been selectively irradiated during an additive manufacturing process.

According to the exemplary embodiment given in the Fig., the irradiation device 8 comprises a first beam generation unit 15 configured to generate the first energy beam 4 and a second beam generation unit 16 configured to generate the second energy beam 9. Yet, the irradiation device 8 could also comprise only one beam generating unit configured to generate an energy beam (which is split so as to generate the first and second energy beam) and an associated beam splitting unit (not shown) configured to split the energy beam generated by the beam generating unit so as to generate the first and second energy beam 4, 9.

The irradiation device 8 comprises a first beam deflection unit 17 assigned to the first energy beam 4 so as to deflect the first energy beam 4 to different positions of a layer 2 of build material 3 and a second beam deflection unit 18 assigned to the second energy beam 9 so as to deflect the second energy beam 9 to different positions of a layer 2 of build material 3. Each beam deflection unit 17, 18 comprises a number of, particularly moveably supported, beam deflection elements (not shown), e.g. deflection mirrors.

The irradiation device 8 further comprises two beam guidance units 19, 20, whereby a first beam guidance unit 19 is configured to guide the first energy beam 4 along an optical path extending from the first energy beam generation unit 15 to the first beam deflection unit 17 and a second beam guidance unit 20 is configured to guide the second energy beam 9 along an optical path extending from the second energy beam generation unit 16 to the second beam deflection unit 18.

As is discernible from the Fig., the detection device 11 is assigned to the second beam guidance unit 20. In particular, the detection device 11 is arranged in an on-axis arrangement with respect to the second beam deflection unit 18. A respective on-axis arrangement of the detection device 11 allows both in constructive and functional regard for a highly integrated arrangement of the detection device 11. A respective on-axis arrangement of the detection device 11 further allows for obtaining high-dynamic and high-resolution detection information, e.g. high-dynamic and high-resolution detection images, of the detected portions of respective layers 2 of build material 3. A respective on-axis arrangement of the detection device 11 also allows for obtaining coordinate values, etc. of respective detected information.

The second beam guidance unit 20 may comprise at least one optical element 21, e.g. a semi-reflective mirror element, configured to guide radiation 12 emitted from a portion of a layer 2 of build material 3 which was selectively irradiated by the first energy beam 4 to the detecting device 11. Hence, the same optical path can be used for an energy beam 9 and for the radiation 12 emitted from a portion of a layer 2 of build material 3 which was selectively irradiated by the first energy beam 4. The direction of extension of the radiation 12 emitted from the portion of the layer 2 of build material 3 through the optical path built by the second beam guidance unit 20 is at least partly a reverse direction of extension of the energy beam 9 through the optical path.

The detection device 11 or a further detection device (not shown) may be configured to additionally detect radiation emitted from a portion of a layer 2 of build material 3 which is currently selectively irradiated by the first energy beam 4. In such a manner, not only the cooling behavior of portions of layers 2 of build material 3 which were selectively irradiated by the first energy beam 4, but also the fusing behavior of portions of layers 2 of build material 3 which are currently selectively irradiated by the first energy beam 4 can be detected.

In either case, the evaluation device 14 or a further evaluation device may be configured to evaluate detected radiation emitted from a portion of a layer 2 of build material 3 which is currently selectively irradiated by the first energy beam 4 with regard to the fusing behavior of the portion of the layer 2 of build material 3 which is currently selectively irradiated by the first energy beam 4. The (further) evaluation device 14 may comprise at least one evaluation algorithm configured to evaluate detected radiation emitted from a portion of a layer 2 of build material 3 which is currently selectively irradiated by the first energy beam 4 with regard to the fusing behavior of the portion of the layer 2 of build material 3 which is currently selectively irradiated by the first energy beam 4.

The apparatus 1 is configured to implement a method for additively manufacturing three-dimensional objects by means of successive layerwise selective irradiation and consolidation of layers 2 of a build material 3 which can be consolidated by means of an energy beam 4. The method comprises the steps of generating at least two energy beams, 4, 9, whereby a second energy beam 9 follows the path of a first energy beam 4 with a defined offset; detecting radiation emitted 12 from a portion of a layer 2 of build material 3 which was selectively irradiated by the first energy beam 4; and evaluating detected radiation 12 emitted from the portion of the layer 2 of build material 3 which was selectively irradiated by the first energy beam 4 with regard to the cooling behavior of the portion of the layer 2 of build material 3 which was selectively irradiated by the first energy beam 4.

## Claims

1. Apparatus (1) for additively manufacturing three-dimensional objects by means of successive layerwise selective irradiation and consolidation of layers (2) of a powdered build material (3) which can be consolidated by means of a first energy beam (4), the apparatus (1) comprising:
- an irradiation device (8) configured to generate at least the first energy beam (4) along a first optical path and a second energy beam (9) along a second optical path, wherein the second energy (9) beam follows the path of the first energy beam (4) with a defined local and/or time offset; wherein the irradiation device (8) comprises a first beam guidance unit (19) configured to guide the first energy beam (4) along the first optical path, the first optical path comprising a path extending from a first beam generation unit (15) to a first beam deflection unit (17); and a second beam guidance unit (20) configured to guide the second energy beam (9) along the second optical path, the second optical path comprising a path extending from a second beam generation unit (16) to a second beam deflection unit (18);
- a detection device (11) assigned to the second beam guidance unit (20) and configured to detect radiation (12) emitted from a portion of a layer (2) of powdered build material (3) which was selectively irradiated by the first energy beam (4);
- an evaluation device (14) configured to evaluate detected radiation (12) emitted from a portion of a layer (2) of powdered build (3) material which was selectively irradiated by the first energy beam (4) with regard to the cooling behavior of the portion of the layer (2) of powdered build material (3) which was selectively irradiated by the first energy beam (4).

2. Apparatus according to Claim 1, wherein the irradiation device (8) is configured to generate the first energy beam (4) with a higher beam power as compared with the second energy beam (9).

3. Apparatus according to Claim 1 or 2, wherein the detection device (11) is arranged in an on-axis arrangement.

4. Apparatus according to any of the preceding Claims, wherein the beam guidance unit (20) comprises at least one optical element (21) configured to guide radiation (12) emitted from a portion of a layer (2) of powdered build (3) material which was selectively irradiated by the first energy beam (4) to the detection device (11).

5. Apparatus according to any of the preceding Claims, wherein the evaluation device (14) is configured to generate evaluation information indicating the cooling behavior of the portion of the layer (2) of powdered build material (3) which was selectively irradiated by the first energy beam (4).

6. Apparatus according to Claim 5, further comprising a control device (23) configured to control operation of the irradiation device (8), the control device (23) being based at least in part on evaluation information determined by the evaluation device (14).

7. Apparatus according to any of the preceding Claims, wherein the detection device (11) or at least one further detection device is configured to detect radiation emitted from a portion of a layer (2) of powdered build material (3) which is currently selectively irradiated by the first energy beam (4).

8. Method for additively manufacturing three-dimensional objects by means of successive layerwise selective irradiation and consolidation of layers (2) of a powdered build material (3) which can be consolidated by means of a first energy beam (4), the method comprises the steps of:
- generating, via an irradiation device (8), at least the first energy beam (4) along a first optical path and a second energy beams (9) along a second optical path, wherein the second energy beam (9) follows the path of the first energy beam (4) with a defined local and/or time offset; wherein the first optical path comprises a path extending from a first beam generation unit (15) to a first beam deflection unit (17) of the irradiation device (8); and the second optical path comprises a path extending from a second beam generation unit (16) to a second beam deflection unit (18) of the irradiation device (8);
- detecting, via a detection device (11) assigned to the second beam guidance unit (20), radiation (12) emitted from a portion of a layer (2) of powdered build material (3) which was selectively irradiated by the first energy beam (4), and
- evaluating detected radiation (12) emitted from a portion of a layer (2) of powdered build material (3) which was selectively irradiated by the first energy beam (4) with regard to the cooling behavior of the portion of the layer (2) of powdered build material (3) which was selectively irradiated by the first energy beam (4).

## Patentansprüche

1. Vorrichtung (1) zur additiven Fertigung dreidimensionaler Objekte mittels aufeinanderfolgender, schichtweiser selektiver Bestrahlung und Verfestigung von Schichten (2) aus einem pulverförmigen Aufbaumaterial (3), das mittels eines ersten Energiestrahls (4) verfestigt werden kann, wobei die Vorrichtung (1) aufweist:
- eine Bestrahlungsvorrichtung (8), welche konfiguriert ist, um mindestens den ersten Energiestrahl (4) entlang eines ersten optischen Wegs und einen zweiten Energiestrahl (9) entlang eines zweiten optischen Wegs zu erzeugen, wobei der zweite Energiestrahl (9) dem Weg des ersten Energiestrahls (4) mit einem festgelegten örtlichen und/oder zeitlichen Versatz folgt; wobei die Bestrahlungsvorrichtung (8) eine erste Strahlführungseinheit (19) aufweist, die konfiguriert ist, den ersten Energiestrahl (4) entlang des ersten optischen Wegs zu führen, wobei der erste optische Weg einen Weg aufweist, der sich von einer ersten Strahlerzeugungseinheit (15) zu einer ersten Strahlablenkeinheit (17) erstreckt; und
eine zweite Strahlführungseinheit (20), welche konfiguriert ist, um den zweiten Energiestrahl (9) entlang des zweiten optischen Wegs zu führen, wobei der zweite optische Weg einen Weg aufweist, der sich von einer zweiten Strahlerzeugungseinheit (16) zu der zweiten Strahlablenkeinheit (18) erstreckt;
- eine Erfassungsvorrichtung (11), welche der zweiten Strahlführungseinheit (20) zugeordnet ist und konfiguriert ist, um Strahlung (12) zu erfassen, die von einem Abschnitt einer Schicht (2) aus pulverförmigem Aufbaumaterial (3) emittiert wird, die selektiv von dem ersten Energiestrahl (4) bestrahlt wurde;
- eine Auswertevorrichtung (14), welche konfiguriert ist, um die erfasste Strahlung (12), die von einem Abschnitt einer Schicht (2) aus pulverförmigem Aufbaumaterial (3) emittiert wird, die selektiv von dem ersten Energiestrahl (4) bestrahlt wurde, mit Bezug auf das Abkühlverhalten des Abschnitts der Schicht (2) aus pulverförmigem Aufbaumaterial (3), die selektiv von dem ersten Energiestrahl (4) bestrahlt wurde, auszuwerten.

2. Vorrichtung nach Anspruch 1, wobei die Bestrahlungsvorrichtung (8) konfiguriert ist, den ersten Energiestrahl (4) verglichen mit dem zweiten Energiestrahl (9) mit einer höheren Strahlleistung zu erzeugen.

3. Vorrichtung nach Anspruch 1 oder 2, wobei die Erfassungsvorrichtung (11) in einer Anordnung auf der Achse angeordnet ist.

4. Vorrichtung nach einem der vorhergehenden Ansprüche, wobei die Strahlführungseinheit (20) mindestens ein optisches Element (21) aufweist, das konfiguriert ist, Strahlung (12), die von einem Abschnitt einer Schicht (2) aus pulverförmigem Aufbaumaterial (3) emittiert wird, die selektiv von dem ersten Energiestrahl (4) bestrahlt wurde, zu der Erfassungsvorrichtung (11) zu führen.

5. Vorrichtung nach einem der vorhergehenden Ansprüche, wobei die Auswertevorrichtung (14) konfiguriert ist, Auswerteinformation zu erzeugen, welche das Abkühlverhalten des Abschnitts der Schicht (2) aus pulverförmigem Aufbaumaterial (3), die selektiv von dem ersten Energiestrahl (4) bestrahlt wurde, angeben.

6. Vorrichtung nach Anspruch 5, ferner aufweisend eine Steuervorrichtung (23), die konfiguriert ist, den Betrieb der Bestrahlungsvorrichtung (8) zu steuern, wobei die Steuervorrichtung (23) mindestens teilweise auf den Auswerteinformationen basiert, welche die Auswertevorrichtung (14) bestimmt hat.

7. Vorrichtung nach einem der vorhergehenden Ansprüche, wobei die Erfassungsvorrichtung (11) oder mindestens eine weitere Erfassungsvorrichtung konfiguriert ist, um Strahlung zu erfassen, die von einem Abschnitt einer Schicht (2) aus pulverförmigem Aufbaumaterial (3) emittiert wird, die gegenwärtig selektiv von dem ersten Energiestrahl (4) bestrahlt wird.

8. Verfahren zur additiven Fertigung dreidimensionaler Objekte mittels aufeinanderfolgender, schichtweiser selektiver Bestrahlung und Verfestigung von Schichten (2) aus einem pulverförmigen Aufbaumaterial (3), das mittels eines ersten Energiestrahls (4) verfestigt werden kann, wobei das Verfahren die Schritte umfasst:
- Erzeugen, mittels einer Bestrahlungsvorrichtung (8), von mindestens dem ersten Energiestrahl (4) entlang eines ersten optischen Wegs und eines zweiten Energiestrahls (9) entlang eines zweiten optischen Wegs, wobei der zweite Energiestrahl (9) dem Weg des ersten Energiestrahls (4) mit einem festgelegten örtlichen und/oder zeitlichen Versatz folgt; wobei der erste optische Weg einen Weg aufweist, der sich von einer ersten Strahlerzeugungseinheit (15) zu einer ersten Strahlablenkeinheit (17) der Bestrahlungsvorrichtung (8) erstreckt und der zweite optische Weg einen Weg aufweist, der sich von einer zweiten Strahlerzeugungseinheit (16) zu einer zweiten Strahlablenkeinheit (18) der Bestrahlungsvorrichtung (8) erstreckt;
- Erfassen, mittels einer Erfassungsvorrichtung (11), welche der zweiten Strahlführungseinheit (20) zugeordnet ist, von Strahlung (12), die von einem Abschnitt einer Schicht (2) aus pulverförmigem Aufbaumaterial (3) emittiert wird, die selektiv von dem ersten Energiestrahl (4) bestrahlt wurde, und
- Auswerten der erfassten Strahlung (12), die von einem Abschnitt einer Schicht (2) aus pulverförmigem Aufbaumaterial (3) emittiert wird, die selektiv von dem ersten Energiestrahl (4) bestrahlt wurde, mit Bezug auf das Abkühlverhalten des Abschnitts der Schicht (2) aus pulverförmigem Aufbaumaterial (3), die selektiv von dem ersten Energiestrahl (4) bestrahlt wurde.

## Revendications

1. Appareil (1) pour la fabrication additive d'objets tridimensionnels au moyen d'une irradiation et d'une consolidation sélectives par couches successives de couches (2) d'un matériau de construction en poudre (3) qui peut être consolidé au moyen d'un premier faisceau d'énergie (4), l'appareil (1) comprenant :
- un dispositif d'irradiation (8) configuré pour générer au moins le premier faisceau d'énergie (4) le long d'un premier chemin optique et un deuxième faisceau d'énergie (9) le long d'un deuxième chemin optique, le deuxième faisceau d'énergie (9) suivant le chemin du premier faisceau d'énergie (4) avec un décalage local et/ou temporel défini ; le dispositif d'irradiation (8) comprenant une première unité de guidage de faisceau (19) configurée pour guider le premier faisceau d'énergie (4) le long du premier chemin optique, le premier chemin optique comprenant un chemin s'étendant d'une première unité de génération de faisceau (15) à une première unité de déviation de faisceau (17) ; et une deuxième unité de guidage de faisceau (20) configurée pour guider le deuxième faisceau d'énergie (9) le long du deuxième chemin optique, le deuxième chemin optique comprenant un chemin s'étendant d'une deuxième unité de génération de faisceau (16) à une deuxième unité de déviation de faisceau (18) ;
- un dispositif de détection (11) affecté à la deuxième unité de guidage de faisceau (20) et configuré pour détecter le rayonnement (12) émis par une partie d'une couche (2) de matériau de construction en poudre (3) qui a été sélectivement irradiée par le premier faisceau d'énergie (4) ;
- un dispositif d'évaluation (14) configuré pour évaluer le rayonnement détecté (12) émis par une partie d'une couche (2) de matériau de construction en poudre (3) qui a été sélectivement irradiée par le premier faisceau d'énergie (4) en ce qui concerne le comportement de refroidissement de la partie de la couche (2) de matériau de construction en poudre (3) qui a été sélectivement irradiée par le premier faisceau d'énergie (4).

2. Appareil selon la revendication 1, dans lequel le dispositif d'irradiation (8) est configuré pour générer le premier faisceau d'énergie (4) avec une puissance de faisceau plus élevée en comparaison du deuxième faisceau d'énergie (9).

3. Appareil selon la revendication 1 ou 2, dans lequel le dispositif de détection (11) est agencé selon un agencement sur l'axe.

4. Appareil selon l'une quelconque des revendications précédentes, dans lequel l'unité de guidage de faisceau (20) comprend au moins un élément optique (21) configuré pour guider le rayonnement (12) émis par une partie d'une couche (2) de matériau de construction en poudre (3) qui a été sélectivement irradiée par le premier faisceau d'énergie (4) vers le dispositif de détection (11).

5. Appareil selon l'une quelconque des revendications précédentes, dans lequel le dispositif d'évaluation (14) est configuré pour générer des informations d'évaluation indiquant le comportement de refroidissement de la partie de la couche (2) de matériau de construction en poudre (3) qui a été sélectivement irradiée par le premier faisceau d'énergie (4).

6. Appareil selon la revendication 5, comprenant en outre un dispositif de commande (23) configuré pour commander le fonctionnement du dispositif d'irradiation (8), le dispositif de commande (23) étant basé au moins en partie sur des informations d'évaluation déterminées par le dispositif d'évaluation (14).

7. Appareil selon l'une quelconque des revendications précédentes, dans lequel le dispositif de détection (11) ou au moins un autre dispositif de détection est configuré pour détecter le rayonnement émis par une partie d'une couche (2) de matériau de construction en poudre (3) qui est actuellement irradiée sélectivement par le premier faisceau d'énergie (4).

8. Procédé de fabrication additive d'objets tridimensionnels au moyen d'une irradiation et d'une consolidation sélectives par couches successives de couches (2) d'un matériau de construction en poudre (3) qui peut être consolidé au moyen d'un premier faisceau d'énergie (4), le procédé comprenant les étapes suivantes :
- la génération, via un dispositif d'irradiation (8), d'au moins le premier faisceau d'énergie (4) le long d'un premier chemin optique et d'un deuxième faisceau d'énergie (9) le long d'un deuxième chemin optique, le deuxième faisceau d'énergie (9) suivant le chemin du premier faisceau d'énergie (4) avec un décalage local et/ou temporel défini ; le premier chemin optique comprenant un chemin s'étendant d'une première unité de génération de faisceau (15) à une première unité de déviation de faisceau (17) du dispositif d'irradiation (8) ; et le deuxième chemin optique comprenant un chemin s'étendant d'une deuxième unité de génération de faisceau (16) à une deuxième unité de déviation de faisceau (18) du dispositif d'irradiation (8) ;
- la détection, par l'intermédiaire d'un dispositif de détection (11) affecté à la deuxième unité de guidage de faisceau (20), du rayonnement (12) émis par une partie d'une couche (2) de matériau de construction en poudre (3) qui a été sélectivement irradiée par le premier faisceau d'énergie (4), et
- l'évaluation du rayonnement détecté (12) émis par une partie d'une couche (2) de matériau de construction en poudre (3) qui a été sélectivement irradiée par le premier faisceau d'énergie (4) en ce qui concerne le comportement de refroidissement de la partie de la couche (2) de matériau de construction en poudre (3) qui a été sélectivement irradiée par le premier faisceau d'énergie (4).
